# EUROPEAN PATENT APPLICATION

(11) **EP 4 668 773 A1**
(43) Date of publication of application: **24.12.2025**
(21) Application number: 23935199.2
(22) Date of filing: 29.12.2023
(51) Int. Cl.: H04Q 11/00

(54) **INFORMATION REQUEST METHOD, OPTICAL NETWORK UNIT, AND OPTICAL LINE TERMINAL**

(30) Priority: 27.04.2023 CN 202310481749
(71) Applicant: ZTE CORPORATION, Shenzhen, Guangdong 518057 (CN)
(72) Inventor: ZHANG, Lin, Shenzhen, Guangdong 518057 (CN); WANG, Peng, Shenzhen, Guangdong 518057 (CN); YUAN, Liquan, Shenzhen, Guangdong 518057 (CN); ZHANG, Weiliang, Shenzhen, Guangdong 518057 (CN)
(74) Representative: Cristinelli, Luca
(86) International application number: PCT/CN2023/143622
(87) International publication number: WO 2024/222033

(57) **Abstract**

The invention provides an information request method, an optical network unit and an optical line terminal, the method includes: receiving, by an optical network unit (ONU), a sequence number (SN) request message sent by an optical line terminal (OLT), wherein the SN request message carries a first start time and a first end time for reporting SN information, and a bandwidth between the first start time and the first end time is a non-fixed bandwidth; reporting, by the ONU, the SN information to the OLT according to the first start time and the first end time.

## Description

### Technical Field

Embodiments of the present invention relate to the field of passive optical network technologies, and in particular, to an information request method, an optical network unit, and an optical line terminal.

### Background

With the continuous development of optical networks, Fiber to the Home (FTTH) has been widely spread, and its central end product, the Optical Line Terminal (OLT), and its terminal end product, the Optical Network Unit (ONU), are also widely spread. In a passive optical network system, a passive optical network device may be classified into a Gigabit-capable Passive Optical Network device (GPON), a 10-Gigabit-capable Passive Optical Networks device (XGPON), a 10G-Gigabit-capable Symmetric Passive Optical Networks device (XGSPON), a 50G Higher speed passive optical networks device (HSPON), a future 100GPON, a 200GPON, and the like according to different Transmission Convergence (TC) layer protocols. These passive optical network system architectures generally include an OLT, an ONU, and an Optical Distribution Network (ODN).

Currently, in a PON system, a GPON is currently used as an asymmetric GPON, and in the asymmetric GPON, when a relevant information request process (for example, a Serial Number (SN) information request and a ranging request) involves a bandwidth request, a relevant standard has specified that a bandwidth response is a fixed value. However, in practical applications, the bandwidth response being a fixed value is not applicable to the symmetrical GPON, and therefore, an information request method applicable to the symmetrical GPON is required.

### Summary

Embodiments of the present invention provide a serial number information request method, an optical network unit and an optical line terminal, so as to at least solve the problem in the related art that there is no applicable information request method for a symmetrical GPON.

An embodiment of the present invention provides, an information request method, including: an optical network unit (ONU) receives a serial number (SN) request message sent by an optical line terminal (OLT), wherein the SN request message carries a first start time and a first end time for reporting SN information, and a bandwidth between the first start time and the first end time is a non-fixed bandwidth; reporting, by the ONU, the SN information to the OLT according to the first start time and the first end time.

Another embodiment of the present invention provides an information request method, including: an optical line terminal (OLT) sending an SN request message to an optical network unit (ONU), wherein the SN request message carries a first start time and a first end time for reporting SN information, and a bandwidth between the first start time and the first end time is a non-fixed bandwidth; receiving the SN information sent by the ONU at the first start time and the first end time.

Another embodiment of the present invention provides an optical network unit, including: a receiving module, configured to receive a sequence number (SN) request message sent by an optical line terminal (OLT), wherein the SN request message carries a first start time and a first end time for reporting SN information, and a bandwidth between the first start time and the first end time is a non-fixed bandwidth; a sending module, configured to send the SN information to the OLT according to the first start time and the first end time.

Another embodiment of the present invention provides an optical line terminal including: a sending module, configured to send an SN request message to an optical network unit (ONU), wherein the SN request message carries a first start time and a first end time for reporting SN information, and a bandwidth between the first start time and the first end time is a non-fixed bandwidth; a receiving module, configured to receive the SN information sent by the ONU at the first start time and the first end time.

Another embodiment of the present invention provides a computer readable storage medium. The computer readable storage medium stores a computer program, wherein when the computer program is executed by a processor to implement the steps in any one of the method embodiments.

Another embodiment of the present invention provides an electronic device, including a memory and a processor, wherein the memory stores a computer program, and the processor is configured to run the computer program so as to execute the steps in any one of the method embodiments.

### Brief Description of the Drawings

Fig. 1 is a structural block diagram of a GPON network architecture according to an embodiment of the present invention;
Fig. 2 is a flowchart of an information request method according to an embodiment of the present invention;
Fig. 3 is a flowchart of an information request method according to another embodiment of the present invention;
Fig. 4 is a structural block diagram of an optical network unit according to an embodiment of the present invention;
Fig. 5 is a structural block diagram of an optical line terminal according to an embodiment of the present invention;
Fig. 6 is a flowchart of an information request method applied to a symmetrical GPON according to an embodiment of the present invention.

### Detailed Description of the Embodiments

Embodiments of the present invention will be described below in detail with reference to the accompanying drawings and in conjunction with embodiments.

It should be noted that, terms such as 'first' and 'second' in the description, claims, and accompanying drawings of the present invention are used to distinguish similar objects, but are not necessarily used to describe a specific sequence or order.

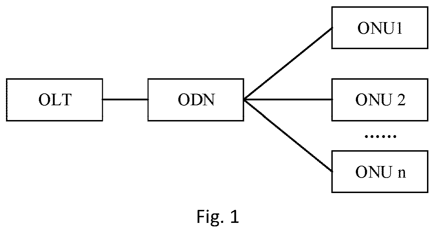

The embodiments of the present invention can operate on the network architecture of a GPON as shown in figure 1. As shown in figure 1, the network architecture includes: an OLT, an ODN and a plurality of ONUs, wherein the OLT is connected to an optical fiber trunk line and is used for completing an uplink access of a PON network, and at the same time, the acquired data is distributed and sent to all corresponding ONU user terminal devices through the ODN; the ONU is configured to receive and response to the data sent by the OLT, and send the Ethernet data to the OLT according to the allocated transmission window; An ODN is an optical transmission physical channel between an OLT and an ONU, and is configured to implement bidirectional transmission of an optical signal.

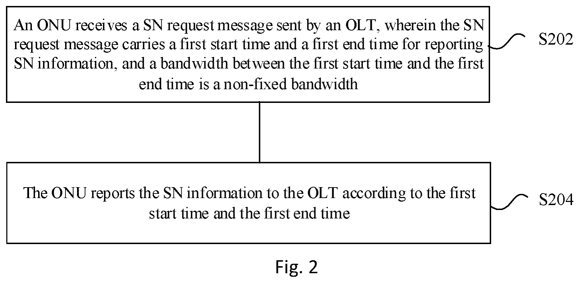

An information request method running on a network architecture is provided in the present embodiment, and the method can run on an ONU. Fig. 2 is a flowchart of an information request method according to an embodiment of the present invention. As shown in Fig. 2, the method includes the following steps:
At S202, an optical network unit (ONU) receives a serial number (SN) request message sent by an optical line terminal (OLT), wherein the SN request message carries a first start time and a first end time for reporting SN information, and a bandwidth between the first start time and the first end time is a non-fixed bandwidth;
In this embodiment, the SN request is triggered only when the ONU is in the sequence number state (O3), and the SN request may be regarded as an ONU registration process.

In an embodiment, the non-fixed bandwidth is not greater than 78 bytes.

At S204: The ONU reports the SN information to the OLT according to the first start time and the first end time.

In an embodiment, an ONU uses a fixed rate as a random delay to calculate a reference point, carries the random delay in SN information, and sends same to an OLT along with the SN information, so that the OLT determines a message sending time according to the random delay of each ONU.

In an embodiment, the SN information includes free bytes.

After S204 in this embodiment, the method further includes: receiving, by the ONU, a ranging request message sent by the OLT; wherein the ranging request message carries a second start time and a second end time for reporting the SN information, and a bandwidth between the second start time and the second end time is a non-fixed bandwidth; and sending, by the ONU, the SN information to the OLT again according to the second start time and the second end time, so that the OLT determines the equalization delay parameter according to reporting of the SN information.

In this embodiment, the ranging request is triggered only when the ONU is in the ranging state (O4).

In an embodiment, the non-fixed bandwidth is not greater than 78 bytes.

In an embodiment, the non-fixed bandwidth in the SN information request process is equal to the fixed bandwidth in the ranging request process.

In an embodiment, the equalization delay parameter is calculated by the OLT by using a fixed rate as a reference point.

By means of the steps, since an SN request message sent by an optical line terminal carries a first start time and a first end time for reporting SN information, wherein a bandwidth between the first start time and the first end time is a non-fixed bandwidth, the problem that the fixed bandwidth is not suitable for a symmetrical GPON can be avoided. Therefore, the problem that there is no applicable information request method for a symmetrical GPON can be solved, and the effect of filling in the blank of the symmetrical GPON application is achieved.

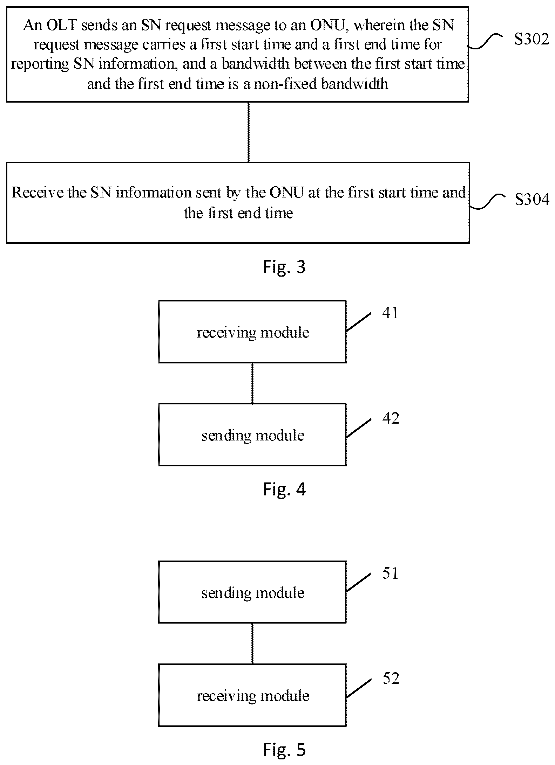

Fig. 3 is a flowchart of an information request method according to an embodiment of the present invention. The method is applied to an OLT. As shown in Fig. 3, the method includes the following steps:
At S302, an optical line terminal (OLT) sends an SN request message to an optical network unit (ONU), wherein the SN request message carries a first start time and a first end time for reporting SN information, and a bandwidth between the first start time and the first end time is a non-fixed bandwidth;
At S304: Receive the SN information sent by the ONU at the first start time and the first end time.

In an embodiment, the SN information carries a random delay calculated with a fixed rate as a reference point.

In an embodiment, the SN information includes idle bytes.

After S304 in this embodiment, the method further includes: sending a ranging request message to the ONU, wherein the ranging request message carries a second start time and a second end time for reporting the SN information, and a bandwidth between the second start time and the second end time is a non-fixed bandwidth; receiving the SN information reported again by the ONU between the second start time and the second end time in response to the ranging request; determining an equalization delay parameter according to the reporting of the SN information, and issuing the equalization delay parameter to the ONU.

In an embodiment, the equalization delay parameter is calculated with a fixed rate as a reference point.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the technical solutions of the present invention essentially or the part contributing to the prior art may be embodied in the form of a software product, the computer software product is stored in a storage medium (such as Read-Only Memory/Random Access Memory, ROM/RAM), the magnetic disk, and the optical disk include several instructions for instructing a terminal device (which may be a mobile phone or a computer), a server, a network device, or the like.

The present embodiment further provides an optical network unit and an optical line terminal. The optical network unit or the optical line terminal is used for implementing the described embodiments and preferred implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

Fig. 4 is a structural block diagram of an optical network unit according to an embodiment of the present invention. As shown in Fig. 4, the optical network unit includes: a receiving module 41 and a sending module 42.

A receiving module 41, configured to receive a sequence number (SN) request message sent by an optical line terminal (OLT), wherein the SN request message carries a first start time and a first end time for reporting SN information, and a bandwidth between the first start time and the first end time is a non-fixed bandwidth;
and a sending component 42, configured to send the SN information to the OLT according to the first start time and the first end time.

Fig. 5 is a structural block diagram of an optical line terminal according to an embodiment of the present invention. As shown in Fig. 5, the apparatus includes a sending module 51 and a receiving module 52.

A sending module 51, configured to send an SN request message to an optical network unit (ONU), wherein the SN request message carries a first start time and a first end time for reporting SN information, and a bandwidth between the first start time and the first end time is a non-fixed bandwidth;

A receiving component 52, configured to receive the SN information sent by the ONU at the first start time and the first end time.

It should be noted that each module may be implemented by software or hardware. The latter may be implemented in the following manner, but is not limited thereto. All the modules are located in a same processor; alternatively, the modules are located in different processors in an arbitrary combination.

To facilitate understanding of the technical solutions provided by the present invention, the following describes the technical solutions in detail with reference to embodiments of specific scenarios.

The problem to be solved in the embodiments of the present invention is to provide an information request processing method applied to a symmetrical GPON. The symmetrical GPON means that the GPON can provide uplink and downlink symmetrical bandwidths, that is, the uplink and downlink transmission rates are the same.

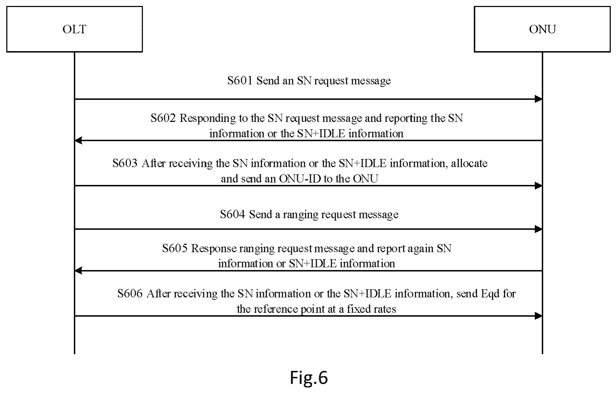

In this embodiment, an SN information request and a ranging request are taken as examples to describe in detail an information request processing method applied to a symmetrical GPON. Fig. 6 is a flowchart of an information request processing method applied to a symmetrical GPON according to an embodiment of the present invention. As shown in Fig. 6, the method includes the following steps:
At S601, the OLT sends an SN request message to the ONU.
At S602, the ONU responds to the SN request message and reports SN information or SN+IDLE information.

In an embodiment, the sequence number request receiving event only occurs when the ONU is in the sequence number state (O3), and the sequence number request is generated by the OLT and includes the following fields: Alloc-ID = 254, PLOAMu = '1', StartTime = X, and StopTime = X + 12; X is the start time of an upstream GTC (GPON Transmission Convergence Layer) frame in bytes. In practical applications, the ONU may send an SN (Sequence Number) longer than 12 bytes according to its own judgment, but not exceeding 500 ns (78 bytes), that is to say, the bandwidth used by the OLT to instruct the ONU to send the SN information is an non-fixed bandwidth.

In addition, before the SN information is returned to the OLT, the ONU further calculates a random delay by using a fixed rate (for example, 1.24416 Gbit/s) as a reference point, so that the OLT determines a message sending time according to the random delay of each ONU, where the random delay is carried in the SN information (for example, may be carried in the 11th byte of Table 1), and is sent to the OLT along with a report of the SN information.

Table 1 is a description of each byte of a serial number SN, and each SN is unique and corresponds to an ONU on a one-to-one basis. The SN includes thirteen bytes, and in this embodiment, no check byte is identified, and only bytes 1-12 are shown.

**Table 1**

| Octet | Content | Description |
|---|---|---|
| 1 | 1111111 | No ONU-ID was assigned yet. |
| | ONU-ID | |
| 2 | 00000001 | If the ONU-ID was assigned to this ONU. |
| 3 | VD1 | Message identification "Serial_Number_ONU". |
| 4 | VD2 | Vendor_ID byte 1. |
| 5 | VD3 | Vendor_ID byte 2. |
| 6 | VD4 | Vendor_ID byte 3. |
| 7 | VSSN1 | Vendor_ID byte 4 (Note 1). |
| 8 | VSSN2 | Vendor-specific serial number byte 1. |
| 9 | VSSN3 | Vendor-specific serial number byte 2. |
| 10 | VSSN4 | Vendor-specific serial number byte 3. |
| 11 | RRRRRRR | The random delay used by the ONU when sending this message, expressed in integer bit periods with respect to the nominal upstream line rate of 1.24416 Gbit/s, regardless of the actual upstream line rate of the ONU. |
| 12 | RRRRAGTT | RRRR = random delay (LSB) (in 32-byte units) used by the ONU when sending this message. |
| | | A = 0; this bit shall not be evaluated by the OLT. |
| | | G = GEM transport is supported by this ONU (G = 1: supported). |
| | | TT = ONU TX Power Level Mode used by the ONU. |
| | | TT = 00: Low power. |
| | | TT = 01: Medium power. |
| | | TT = 10: High power. |
| | | TT = 11: Reserved. |
| NOTE 1 - The code set for the Vendor_ID is specified in [b-ANSI T1.220]. The 4 characters are mapped in the 4-byte field by taking each ASCII/ANSI character code and concatenating them. Example: Vendor_ID = ABCD □ VID1 = 0x41, VID2 = 0x42, VID3 = 0x43, VID4 = 0x44. | | |
| NOTE 2 - Be mindful that the coding of the power level modes in the Serial_Number_ONU message, where 2 is highest and 0 is lowest, is opposite to that in the Upstream_Overhead message. | | |

In the standard, random delay is reported in 32-byte units.

At S603, after receiving the SN information or the SN+IDLE information, the OLT allocates and sends an ONU-ID to the ONU.

At S604, the OLT sends a ranging request message to the ONU.

In an embodiment, a ranging request receiving event ranging measurement is the distance between an OLT and an ONU, the event only occurs when the ONU is in a ranging state (O4); the OLT generates a ranging request, including the following fields: Alloc-ID = 254, PLOAMu = '1', StartTime = X and StopTime = X + 12, where X is the start time of a GTC frame of a ranging request response in byte units. In practical applications, the ONU may send an SN (Sequence Number) longer than 12 bytes according to its own judgment, but not exceeding 500 ns (78 bytes), that is to say, the bandwidth used by the OLT to instruct the ONU to send the SN information is an unfixed bandwidth.

At S605, the ranging request message is responded and the SN information or SN+IDLE information is reported again.

At S606, after receiving the SN information or the SN+IDLE information, the OLT sends an equalization delay parameter (Equalization Delay, Eqd) by using a fixed rate (for example, 1.24416 Gbit/s) as a reference point.

Table 2 is the content of each byte in the ranging time message sequence, and the sequence bears the Eqd delivered to the ONU, and as shown in Table 2, the fourth byte bears the Eqd information.

**Table 2**

| Octet | Content | Description |
|---|---|---|
| 1 | ONU-ID | Directed message to one ONU. |
| 2 | 00000100 | Message identification "Ranging_Time". |
| 3 | 00000000b | '0' - Main path EqD. |
| | | '1' - Protection path EqD. |
| 4 | ddddddd | Equalization delay value (Eqd), expressed in integer bit periods with respect to the nominal upstream line rate of 1.24416 Gbit/s, |
| | | regardless of the actual upstream line rate of the ONU. |
| 5 | ddddddd | |
| 6 | ddddddd | |
| 7 | ddddddd | LSB of delay. |
| 8-12 | Unspecified | |
| NOTE 1 - The unit of the equalization delay parameter is bits. | | |
| NOTE 2 - Both the main path EqD and the protection path EqD can be assigned to the ONU using this message. | | |

In the standard, Eqd is sent by taking bit as a unit. In this embodiment, for the GPON symmetry, the Random delay report and Eqd delivery are delivered with a fixed rate as a reference point, for example, 1.24416 Gbit/s as a reference point.

In the section 10.2.5.2 of the standard, the response regarding the SN request bandwidth and the ranging request bandwidth is StartTime = X, StopTime = X + 12, i.e. the response bandwidth for the asymmetric GPON is a fixed value 12; for the symmetry of the GPON, the response to the SN request bandwidth and the ranging request bandwidth is StartTime=X, and StopTime=X+Y. The response bandwidth is not a fixed value, and specifically, the SN message length may be responded to, or the SN+IDLE may be responded to according to the actually delivered bandwidth length. The StarTime and the StopTime specify the starting byte position and the ending byte position of the GTC frame of the response request, respectively.

The foregoing embodiments of the present invention are applicable to a PON system home or enterprise networking, an FTTR scenario, and the like, and can provide wider bandwidth and better user experience.

Embodiments of the present invention also provide a computer readable storage medium. The computer readable storage medium stores a computer program, wherein the computer program is configured to execute the steps in any one of the described method embodiments during running.

In an embodiment, the computer readable storage medium may include, but is not limited to, any medium that can store a computer program, such as a USB flash drive, a read-only memory (Read-Only Memory, ROM for short), a random access memory (Random Access Memory, RAM for short), a removable hard disk, a magnetic disk, or an optical disc.

Embodiments of the present invention further provide an electronic apparatus, including a memory and a processor. The memory stores a computer program. The processor is configured to run the computer program to execute steps in any one of the method embodiments.

In an embodiment, the electronic apparatus can further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those skilled in the art should understand that each module or each step of the present invention can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, the present invention is not limited to any particular hardware and software combination.

The foregoing descriptions are merely exemplary embodiments of the present invention, but are not intended to limit the present invention. For those skilled in the art, the present invention may have various modifications and variations. Any modifications, equivalent replacements, improvements and the like made within the principle of the present invention shall fall within the scope of protection of the present invention.

## Claims

1. An information request method, comprising:
receiving, by an optical network unit, ONU, a serial number, SN, request message sent by an optical line terminal, OLT, wherein the SN request message carries a first start time and a first end time for reporting SN information, and a bandwidth between the first start time and the first end time is a non-fixed bandwidth; and
reporting, by the ONU, the SN information to the OLT according to the first start time and the first end time.

2. The method according to claim 1, wherein the SN information carries a random delay calculated with a fixed rate as a reference point.

3. The method according to claim 1, wherein the SN information comprises idle bytes.

4. The method according to claim 1, wherein after reporting, by the ONU, the SN information to the OLT according to the first start time and the first end time, the method further comprises:
receiving, by the ONU, a ranging request message sent by the OLT; wherein the ranging request message carries a second start time and a second end time for reporting the SN information, and a bandwidth between the second start time and the second end time is a non-fixed bandwidth; and
sending, by the ONU, the SN information to the OLT again according to the second start time and the second end time, so that the OLT determines the equalization delay parameter according to reporting of the SN information.

5. The method according to claim 4, wherein the equalization delay parameter is calculated by the OLT by using a fixed rate as a reference point.

6. An information request method, comprising:
sending, by an optical line terminal, OLT, an SN request message to an optical network unit, ONU, wherein the SN request message carries a first start time and a first end time for reporting SN information, and a bandwidth between the first start time and the first end time is a non-fixed bandwidth; and
receiving the SN information sent by the ONU at the first start time and the first end time.

7. The method according to claim 6, wherein the SN information carries a random delay calculated with a fixed rate as a reference point.

8. The method according to claim 6, wherein the SN information comprises idle bytes.

9. The method according to claim 6, wherein after receiving the SN information sent by the ONU at the first start time and the first end time, the method further comprises:
sending a ranging request message to the ONU, wherein the ranging request message carries a second start time and a second end time for reporting the SN information, and a bandwidth between the second start time and the second end time is a non-fixed bandwidth;
receiving the SN information reported again by the ONU between the second start time and the second end time in response to the ranging request; and
determining an equalization delay parameter according to the reporting of the SN information, and issuing the equalization delay parameter to the ONU.

10. The method according to claim 9, wherein the equalization delay parameter is calculated with a fixed rate as a reference point.

11. An optical network unit, comprising:
a receiving module, configured to receive a sequence number, SN, request message sent by an optical line terminal, OLT, wherein the SN request message carries a first start time and a first end time for reporting SN information, and a bandwidth between the first start time and the first end time is a non-fixed bandwidth;
a sending module, configured to send the SN information to the OLT according to the first start time and the first end time.

12. An optical line terminal, comprising:
a sending module, configured to send an SN request message to an optical network unit, ONU, wherein the SN request message carries a first start time and a first end time for reporting SN information, and a bandwidth between the first start time and the first end time is a non-fixed bandwidth;
a receiving module, configured to receive the SN information sent by the ONU at the first start time and the first end time.

13. A computer readable storage medium, storing a computer program, wherein the computer program is configured to, when the computer program is executed by a processor, cause the processor to implement the steps of the method according to any one of claims 1 to 5, or the steps of the method according to any one of claims 6 to 10.

14. An electronic apparatus, comprising a memory, a processor, and a computer program stored in the memory and is executable by the processor, the processor is configured to execute the computer program to implement the steps of the method according to any one of claims 1 to 5, or the steps of the method according to any one of claims 6 to 10.
